# EUROPÄISCHE PATENTANMELDUNG

(11) **EP 1 365 083 A2**
(43) Veröffentlichungstag der Anmeldung: **26.11.2003**
(21) Anmeldenummer: 03003096.9
(22) Anmeldetag: 13.02.2003
(51) Int. Cl.: E04F 10/06, E06B 9/68, G01P 13/00

(54) **Sonnenschutz mit Windstärkemessung**

(30) Priorität: 24.05.2002 DE 10223062
(71) Anmelder: WEINOR Dieter Weiermann GmbH & Co., D-50829 Köln (DE)
(72) Erfinder: Stawski, Karl-Heinz, 50769 Köln (DE)
(74) Vertreter: COHAUSZ DAWIDOWICZ HANNIG & PARTNER

(57) **Zusammenfassung**

Die Erfindung betrifft einen Sonnenschutz mit einem motorisch ein- und ausfahrbaren flächigen Sonnenschutzmittel insbesondere Markise, Jalousie, Rollade, Rollo oder Schirm, wobei die vom Wind erzeugten Bewegungen des flächigen Sonnenschutzmittels vom Sonnenschutzmittel auf den Rotor des Motors übertragbar sind, und dass diese Bewegungen, insbesondere Schwingungen und/oder Vibrationen des Rotors messtechnisch erfasst und zur Messung der Windstärke ausgewertet werden

## Beschreibung

Die Erfindung betrifft einen Sonnenschutz mit einem motorisch ein- und ausfahrbaren flächigen Sonnenschutzmittel insbesondere Markise, Jalousie, Rollade, Rollo oder Schirm.

Es ist bekannt, einen Sonnenschutz, wie z.B. eine Markise mit einem Windmessgerät auszustatten, das die Windgeschwindigkeiten angibt. Hierbei wird ab einer bestimmten Windstärke die Markise eingefahren, damit sie im ausgefahrenen Zustand durch Sturm, insbesondere Sturmböen, nicht zerstört wird.

Aufgabe der Erfindung ist es, einen Sonnenschutz der eingangs genannten Art so zu verbessern, dass eine Windmessung vorgenommen wird, ohne ein zusätzliches Windmessgerät zu erfordern.

Diese Aufgabe wird erfindungsgemäß dadurch gelöst, dass die vom Wind erzeugten Bewegungen des flächigen Sonnenschutzmittels vom Sonnenschutzmittel auf den Rotor des Motors übertragbar sind, und dass diese Bewegungen, insbesondere Schwingungen und/oder Vibrationen des Rotors, messtechnisch erfasst und zur Messung der Windstärke ausgewertet werden.

Hierdurch bildet der Sonnenschutz zusammen mit seinem Antriebsmotor selber das Windmessgerät, so dass es eines zusätzlichen Gerätes nicht bedarf. Es wird die gleiche Sicherheit wie bei einem externen Windmessgerät erreicht und hierbei ist nur ein geringer zusätzlicher technischer Aufwand erforderlich. Auch ist ein nachträglicher Einbau leicht möglich.

Besonders vorteilhaft ist es, wenn die in den Wicklungen des Stators durch die Bewegungen, insbesondere Schwingungen des Rotors erzeugten Spannungen und/oder Stromstärken gemessen werden.

Auch wird vorgeschlagen, dass ab einer bestimmten Stärke der Bewegungen, insbesondere Schwingungen oder Vibrationen des Rotors das flächige Sonnenschutzmittel eingefahren wird.

Ein Ausführungsbeispiel der Erfindung wird im folgenden näher beschrieben:

Ein Sonnenschutz weist ein flächiges Sonnenschutzmittel auf, insbesondere das Tuch einer Markise, eines Rollos oder eines Sonnenschirms, oder die Lamellen einer Jalousie bzw. die Profile einer Rollade. All diesen Sonnenschutzvorrichtungen ist gemeinsam, dass das flächige Sonnenschutzmittel im ausgefahrenen Zustand dem Wind ausgesetzt ist und es bei hoher Windstärke geschehen kann, dass es beschädigt oder zerstört wird. Hierbei nimmt oft auch die Sonnenschutzvorrichtung, die das Sonnenschutzmittel trägt oder führt, selber Schaden.

Das Ein- und Ausfahren des Sonnenschutzmittels wird durch einen Motor vorgenommen, der bei einer Markise, einer Jalousie, einer Rollade oder einem Rollo als auch einem Schirm die Wickelwelle antreibt, die das Sonnenschutzmittel oder ein das Sonnenschutzmittel betätigendes Band, Schnur oder Kette aufnimmt.

Sobald Wind, insbesondere Sturm auf das flächige Sonnenschutzmittel einwirkt, beginnt dieses sich zu bewegen und diese Bewegungen werden direkt oder über Verbindungsmittel, insbesondere Zugmittel und/oder ein Getriebe, auf den Rotor des Motors übertragen. Der Rotor wird damit zu Bewegungen veranlasst in einem Zeitraum, in dem der Motor das Sonnenschutzmittel nicht betätigt, d.h. an sich ausgeschaltet ist. Diese vom Wind erzeugten Bewegungen, insbesondere Schwingungen und/oder Vibrationen des Rotors erzeugen Spannungen, wie dies auch bei einem elektrischen Generator üblich ist. Allerdings sind diese Spannungen verhältnismäßig klein. Sie reichen aber aus, um messtechnisch erfasst werden zu können. Diese Messwerte werden einer messtechnischen Einrichtung übertragen und von dieser ausgewertet.

Sobald die messtechnische Einrichtung Spannungswerte erfasst, die anzeigen, dass ein stärkerer Wind bzw. Sturm auf das Sonnenschutzmittel einwirken, schaltet die messtechnische Einrichtung direkt oder über ein Relais den Motor in der Drehrichtung ein, die dazu führt, dass das Sonnenschutzmittel eingefahren wird und damit dem Wind/Sturm nicht mehr ausgesetzt ist.

## Patentansprüche

1. Sonnenschutz mit einem motorisch ein- und ausfahrbaren flächigen Sonnenschutzmittel insbesondere Markise, Jalousie, Rollade, Rollo oder Schirm, **dadurch gekennzeichnet, dass** die vom Wind erzeugten Bewegungen des flächigen Sonnenschutzmittels vom Sonnenschutzmittel auf den Rotor des Motors übertragbar sind, und dass diese Bewegungen, insbesondere Schwingungen und/oder Vibrationen des Rotors messtechnisch erfasst und zur Messung der Windstärke ausgewertet werden.

2. Sonnenschutz nach Anspruch 1, **dadurch gekennzeichnet, dass** die in den Wicklungen des Stators durch die Bewegungen, insbesondere Schwingungen des Rotors erzeugten Spannungen und/oder Stromstärken gemessen werden.

3. Sonnenschutz nach Anspruch 1 oder 2, **dadurch gekennzeichnet, dass** ab einer bestimmten Stärke der Bewegungen, insbesondere Schwingungen oder Vibrationen des Rotors das flächige Sonnenschutzmittel eingefahren wird.
